(19) Europäisches Patentamt
European Patent Office
Office européen des brevets

(11) Numéro de publication: **0 337 047 A1**

(12) **DEMANDE DE BREVET EUROPEEN**

(21) Numéro de dépôt: **88870059.8**

(51) Int. Cl.⁴: **B01J 20/16**

(22) Date de dépôt: **13.04.88**

(43) Date de publication de la demande:
**18.10.89 Bulletin 89/42**

(84) Etats contractants désignés:
**BE**

(71) Demandeur: **RIJKSUNIVERSITEIT GENT**
**FAKULTEIT LANDBOUWWETENSCHAPPEN**
**LEERSTOEL VOOR BODEMFYSIKA**
**Coupure Links 653**
**B-9000 Gent(BE)**

(72) Inventeur: **De Boodt, Marcel Florent Louis Filip**
**Patijntjestraat 113**
**B-9000 Gent(BE)**

(74) Mandataire: **Gaspar, Florent et al**
**Bureau VANDER HAEGHEN 63, avenue de la Toison d'Or**
**B-1060 Bruxelles(BE)**

(54) **Procédé pour augmenter la surface spécifique et l'activité d'une matière adsorbante constituée d'alumino-silicates et matière ainsi obtenue.**

(57) Pour préparer ou activer une matière adsorbante constituée d'alumino-silicates partiellement altérés, on soumet des particules de roches anamorphosées contenant au moins 17 % en poids de stériles, récupérées des résidus charbonniers à une oxydation par grillage à l'air en les incinérant dans un four à lit fluidisé à une température comprise entre 350 et 800 °C. On peut également soumettre des particules de roches anamorphosées à une oxydation à l'aide d'eau oxygénée ou en phase aqueuse en présence d'air ou d'oxygène éventuellement sous pression, à une température inférieure ou égale à la température d'ébullition du mélange réactionnel. L'oxydation a pour effet d'éliminer le carbone libre et d'oxyder les ions fer ferreux $Fe^{++}$ en ions fer ferrique $Fe^{+++}$.

Les particules ainsi obtenues présentent une granulométrie tellement fine qu'elles empêchent la percolation de l'eau. En liant ces particules entre elles avec 0.1 à 2 % de polymères chimiques, de ciments ou de liants du type pyroaurites, on arrive à provoquer une filtration rapide et une augmentation de plus de 120 % de la capacité d'absorption.

EP 0 337 047 A1

Xerox Copy Centre

# PROCEDE POUR AUGMENTER LA SURFACE SPECIFIQUE ET L'ACTIVITE D'UNE MATIERE ADSORBANTE CONSTITUEE D'ALUMINO-SILICATES ET MATIERE AINSI OBTENUE

La présente invention est relative à un procédé pour préparer une matière adsorbante active constituée d'alumino-silicates partiellement altérés, récupérés des déblais stériles des terrils charbonniers.

Les matières adsorbantes actives trouvent leur principale application dans le traitement des eaux résiduaires, en particulier la filtration rapide et la percolation en vue de préserver les végétations agricoles et silvicoles des pollutions issues de certaines activités industrielles ou agro-industrielles. Les particules de roches activées se présentent sous la forme de roches lamellées, jouissant d'une structure en feuillets facilement clivable et décomposable.

On connaît par le brevet belge n° 901.038, un procédé pour préparer un produit naturel utilisable comme substrat pour l'agriculture à partir de roches de l'époque carbonifère insérées entre les ères du Permien et du Dévonien. Ces roches sont entre autres déposées en tant que déblais stériles de l'extraction de la houille, sur des terrils charbonniers où elles sont soumises à l'altération et au délavement au contact des agents atmosphériques.

Il s'agit de fines particules poreuses, extraites il y a une centaine d'années, des gisements houillers à une profondeur de 50 à 800 m et séparés de la houille, en particulier de l'anthracite. Les terrils charbonniers concernés sont principalement ceux du sillon belge Sambre-et-Meuse.

Ces terrils sont actuellement réexploités pour récupérer le charbon résiduel. Il est économique de réaliser simultanément la sélection de ces particules d'alumino-silicate, de manière à combiner l'extraction de ces particules avec une opération technique de recouvrement du combustible solide encore présent dans les terrils.

Lorsqu'on effectue l'élutriation par lavage à l'eau desdits déblais de terrils d'anciennes exploitations houillères, on obtient une suspension colloïdale qui est condensée dans un rapport de 1 à 10 sous forme d'une pulpe qui est ensuite soumise à une concentration sous un rapport de concentration de 1 à 200 environ.

La pulpe est composée d'une fraction silicieuse et d'une fraction argileuse dans des proportions variant de 5 à 15 % et de 95 à 85 % respectivement.

La fraction argileuse est faite de chlorite, de kaolinite, d'illite et de couches mixtes.

On donne ci-après la composition minéralogique, ainsi que l'analyse chimique de la pulpe au Tableau 1.

Tableau 1

| COMPOSITION MINERALOGIQUE | | |
|---|---|---|
| Silice libre | : | 8 à 12 % |
| Kaolinite | : | 15 à 20 % |
| Chlorite | : | 15 à 20 % |
| Illite | : | 45 à 55 % |
| Montmorillonite libre | : | moins de 1 % |

Ces particules d'alumino-silicates anamorphosés formant la pulpe, proviennent en fait de schistes cristallisés présentant une structure en feuillets facilement clivable. La structure interne de ces roches a été largement modifiée par épigénèse sous l'action des intempéries et soumises à une altération partielle au cours du temps, due à l'action alternée de conditions réductrices et de conditions oxydantes, qui provoquent la dégradation de la roche par la formation de cavités nouvelles qui ont pour effet non seulement d'améliorer l'accessibilité de la surface adsorbante mais également d'augmenter la surface spécifique desdites roches.

La silice libre se présente sous forme de feuillets de silice qui sont une répétition bidimensionnelle d'un tétraèdre ayant pour centre un atome de silice et pour sommets des atomes d'oxygène. La hauteur du tétraèdre correspond à l'épaisseur de la feuille, c'est-à-dire 0,22 nm. Les tétraèdres sont disposés dans un plan de manière à former une répétition d'hexagones.

La kaolinite consiste en une alternance de feuillets de silice et de feuillets d'alumine. Un feuillet d'alumine est plus complexe qu'un feuillet de silice. Il consiste en une répétition d'octaèdres et de groupes hydroxyles. Ces feuillets de silice et d'alumine forment des lits parallèles dont la distance unitaire le long de

l'axe cristallographique C atteint 0,72 mm. Il y a diverses familles de kaolinites dont la structure dépend des variations dans le feuillet d'aluminium.

La montmorillonite ou smectite est formée de feuillets d'alumine enserrées chacune entre deux feuillets de silice. Chaque lamelle a une épaisseur de 0,79 nm mais peut atteindre 1 micron. Ces lamelles sont séparées l'une de l'autre par un film d'eau dont l'épaisseur varie entre 0,17 et 4 nm.

L'illite consiste, tout comme la montmorillonite, en un feuillet d'alumine enserré entre deux feuillets de silice. Chaque lamelle a une épaisseur de 1 nm. Deux lamelles consécutives sont réunies entre elles par des atomes potassium qu'elles se partagent. L'illite provient généralement de feldspath soumis à l'épigénèse.

L'illite est un enchevêtrement à part égale de cristaux de muscovite et de montmorillonite, cette dernière pouvant être libérée par broyage submicronique, ou naître par épigénèse (au contact des agents atmosphériques) et d'autres facteurs agronomiques.

L'illite contenue dans le produit selon l'invention en concurrence de 50 à 60 % en poids sur la base des matières sèches non calcinées est le minéral constituant le réservoir en potassium.

Pour ces trois derniers alumino-silicates, la concentration de fer et en particulier la concentration en ions ferreux a été déterminée. Elle varie entre 0,7 et 1,5 % en poids.

Les réactions de décomposition des feldspaths dues au processus d'anamorphose qui libère progressivement la montmorillonite et l'illite de son corset cristallin de muscovite sont variées. Une forme de réaction exagérément simplifiée peut être illustrée par l'équation suivante :

$$2KAlSi_3O_8 + 2CO_2 + 3H_2O \longrightarrow$$

$$4SiO_2 \quad + \quad 2KHCO_3 \quad + \quad Al_2O_3.2SiO_2.2H_2O$$

| silice | bicarbonate de potassium | silicate d'aluminium hydraté |
|---|---|---|

Un feuillet d'illite ou de montmorillonite formé par un enchaînement d'octaèdres ne parvient pas à satisfaire les valeurs de tous les atomes qui le composent comme permet de la faire le feuillet de silice.

Certains atomes d'oxygène non satisfaits du feuillet d'aluminium sont partagés avec le feuillet de silice. Ainsi la présence de potassium, de magnésium et de calcium dans le réseau cristallographique interne des alumino-silicates favorise la formation de cations échangeables.

Les alumino-silicates anamorphosés sont aptes à réaliser l'adsorption ou l'emprisonnement de divers polluants gazeux tels que $SO_2$, $NO_x$, $H_2S$, CO, gaz nocifs, gaz de combats ou de sels solubles dans l'eau tels que nitrite et phosphate ou composés de métaux lourds.

Ils permettent ainsi le retour des formes de vie souhaitées et rétablissent la possibilité de consomma tion de matières antérieurement polluées.

La présente invention vise à exalter l'activité d'adsorption chimiquement et/ou thermiquement. Elle vise à créer des cavités adsorbantes dans les feuillets d'alumino-silicates et à augmenter la surface interne spécifique d'adsorption jusqu'à 100 et même 200 m2/g. Elle vise également à relier les particules d'alumino-silicates de manière à former des granules poreux perméables à l'eau et résistant à l'écrasement et à l'abrasion, de manière à pouvoir être utilisée comme masse filtrante dans un procédé de percolation.

L'invention a pour objet un procédé pour préparer une matière adsorbante active constituée d'alumino-silicates partiellement altérés, récupérés des déblais stériles des terrils charbonniers, caractérisé en ce qu'on soumet lesdits alumino-silicates à une réaction d'oxydation en vue d'éliminer le carbone libre et d'oxyder les ions fer ferreux $Fe^{++}$ en ions fer ferrique $Fe^{+++}$.

Dans un premier mode de mise en oeuvre du procédé selon l'invention, on soumet lesdits alumino-silicates à un grillage oxydant, généralement à l'air ou à une incinération à une température comprise entre 350 et 800 °C. La température est choisie de manière à assurer une vitesse d'oxydation convenable tout en ne dépassant pas la température de vitrification des silicates.

Selon une particularité de l'invention, on met en oeuvre pour le grillage à l'air ou l'incinération des résidus charbonniers, un four à lit fluidisé.

Les alumino-silicates sont constitués de résidus charbonniers contenant au moins 17 % en poids de stériles.

Les particules de roches activées selon l'invention, sont constituées essentiellement des cendres

volantes, récupérées des gaz de combustion par exemple à l'aide de cyclones et/ou d'électro-filtres, des gaz de combustion provenant du grillage à l'air ou de l'incinération dans un four à lit fluidisé, à une température comprise entre 350 et 800 °C de résidus charbonniers contenant au moins 17 % en poids de stériles.

Un deuxième procédé pour obtenir une matière adsorbante active ayant une surface spécifique accrue consiste à soumettre des particules de roches anamorphosées à un lavage à l'aide d'une solution agressive de trichlorure d'aluminium concentré. Par migration des atomes d'aluminium trivalent dans des pores des strates schisteuses on favorise certaines réactions de substitution du magnésium bivalent par de l'aluminium trivalent. On crée ainsi des discontinuités et des sites actifs dans les alumino-silicates activés chimiquement. En respectant le pH et les proportions ioniques, on peut provoquer la formation de pyraurite $(M_1{}^{2+})_6(M_2{}^{3+})_2(OH)_{16}\ CO_3.H_2O$ où $M_1$ est un ion divalent et $M_2$ un ion trivalent par exemple respectivement $Mg^{2+}$ et $Al^{3+}$.

La capacité d'échange cationique est augmentée de manière à atteindre environ 8 à 10 milliéquivalents/100g. Cette valeur est environ 15 fois supérieure à celle du sable, malgré la structure plus grossière des roches anamorphosées. Le poids spécifique est compris entre 1.35 et 1.65.

Ainsi, en traitant des microcristaux de pyraurite de la formule suivante :

$Mg_6.Al_2(OH)_{16}.CO_3.H_2O$

en suspension dans l'eau à raison d'une concentration de 0.1 à 0.5, par une solution de trichlorure d'aluminium en maintenant le pH à une valeur constante de 8.2, on obtient un produit adsorbant amphotère apte à capter des ions nitrates et sulfates.

Comme décrit précédemment, un feuillet de pyraurite ne parvient pas à satisfaire les valeurs de tous les atomes qui le composent comme permet de le faire le feuillet de silice. Ainsi, certains octaèdres ne contiennent pas d'atome d'aluminium. Cela empêche toute symétrie.

La complexité d'un tel feuillet est favorisée par la substitution isomorphe. Le remplacement d'un ou plusieurs atomes d'aluminium par du magnésium dans le réseau cristallographique de l'illite et de la montmorillonite entraîne la formation de places libres dans l'octaèdre.

La substitution d'un atome de magnésium bivalent par un atome d'aluminium trivalent aggrave le déséquilibre.

Le procédé de préparation consiste à effectuer un lavage des roches jusqu'à l'obtention d'une suspension colloïdale qui est condensée en une pulpe. Le rapport de condensation étant de 1 à 10 entre la suspension colloïdale et la pulpe, ensuite concentrée, le rapport de concentration entre la suspension colloïdale et le gâteau argileux étant de 1 à 200 environ.

Ce produit obtenu est un produit naturel ayant la granulométrie du sable et une conformation structurée, incompressible et dimensionnellement stable.

Près de 80 à 90 % des grains ont une dimension comprise entre 50 et 2.000 microns dont environ 50 % entre 100 et 500 environ.

Dans un troisième mode de mise en oeuvre du procédé selon l'invention, la réaction d'oxydation est réalisée par exemple, à l'aide d'eau oxygénée ou en phase aqueuse en présence d'air ou d'oxygène éventuellement sous pression, à une température inférieure ou égale à la température d'ébullition.

Les principales applications des particules de roches d'alumino-silicates activées selon l'invention sont les suivantes :

- élimination par adsorption de matières solides en suspension;
- percolation de cations tels que potassium, calcium, sodium et ammonium;

ex. : métaux lourds tels que plomb, cobalt, nickel, vanadium, cadmium, zinc et d'anions tels que phosphate, sulfate, nitrite et cyanure;

- rétention par mise en contact de gaz ou d'air ou d'eau chargés d'acide sulfhydrique, de mercaptans et/ou de colorants;
- assainissement de sols par incorporation des particules selon l'invention;
- rétention de molécules organiques telles que les colorants, les sucres (pentoses, polyuronides), les amidons et leurs sous-produits, et les aromatiques, en particulier les naphtols et le benzène.

Les particules de roches susdites sont utilisables notamment comme substrat et structurant de sols susceptibles d'améliorer la qualité des sols, de restituer leur structure physique et de compenser l'appauvrissement des sols en éléments minéraux; elles servent également dans la lutte contre l'eutrophisation des eaux de surface, la préparation d'eau potable pour animaux et humains et pour l'assainissement de l'atmosphère et de certaines ambiances.

L'invention s'applique particulièrement à l'industrie chimique et technobiologique. Elle s'adresse aux procédés de percolation dans lesquels un fluide s'écoule au travers d'un empilage de particules solides d'alumino-silicates susdits constituant par exemple le garnissage d'une colonne de contact.

Pour assurer la perméabilité des colonnes, on agrège les particules fines à l'aide de polymères organiques connus sous le nom de conditionneurs de sols, par exemple le polyacrylamide, le butadiène et l'urée-formaldéhyde.

Dans d'autres cas, l'agrégation des fines particules d'alumino-silicates s'obtient par l'emploi de ciments ou de cendres de cimenterie que l'on sépare par cyllone. L'addition de ces liants se réalise par mélangeage en étapes successives, d'une suspension de ces liants dans l'eau, sous forme de boue, que l'on ajoute aux particules d'aluminium silicates en les remuant énergiquement.

Le durcissement de la conglomération des particules en granules se réalisent grâce à l'effet dit "pouzzolane".

Si le combustible d'une centrale thermique au charbon, contient des quantités suffisantes de dolomine et de schiste, on observe la création de liaisons du type pyraurites reliant entre elles des fines particules d'alumino-silicates dont sont constituées les cendres volantes.

Les agrégats ainsi créés, qui ont les dimensions d'une particule de sable, conviennent parfaitement comme matière de remplissage ou masse filtrante dans les filtres rapides. Ce coefficient de transfert $K_s$ peut atteindre 50 cm/h et davantage. La vitesse de percolation peut même atteindre 1m/h.

La répartition granulométrique de divers échantillons de cendres séparés par cyclones des gaz de combustion de résidus charbonniers dans un four à lit fluidisé du type Kempische Steenkoolmijnen à Beringen (Belgique), porté à 400 - 800 °C, est donnée au tableau II :

Tableau II : REPARTITION GRANULOMETRIQUE

| % | < 100µ | 100-250µ | 250-500µ | > 500µ |
|---|---|---|---|---|
| Echantillón 1 | 33.9 | 32.1 | 30.9 | 3.1 |
| Echantillon 2 | 44.7 | 28.3 | 23.8 | 3.3 |
| Echantillon 3 | 38.2 | 29.5 | 29.2 | 3.1 |
| Echantillon 4 | 35.4 | 34.4 | 26.0 | 4.1 |
| Echantillon 5 | 35.2 | 29.7 | 30.2 | 4.9 |
| Echantillon 6 | 35.6 | 31.6 | 30.4 | 2.4 |

(suite du tableau II)

| Echantillon | pH | Ec µS/cm | % $CaCO_3$ | CEC meq/100g | Surface spécifique m2/g | Densité apparente g/cm3 |
|---|---|---|---|---|---|---|
| 1 | 11.6 | 526 | 8.63 | 4.83 | 11.62 | 2.2384 |
| 2 | 10.5 | 622 | 5.58 | 3.60 | 9.97 | 2.2710 |
| 3 | 11.5 | 678 | 6.85 | 5.60 | 10.02 | 2.2375 |
| 4 | 9.3 | 945 | 6.60 | 3.48 | 11.96 | - |
| 5 | 11.3 | 652 | 6.09 | 5.75 | 10.53 | - |
| 6 | 10.4 | 728 | 6.60 | 4.63 | 10.27 | - |

La surface spécifique du résidu charbonnier de départ est de 0,1 à 0,5 m2/g avant combustion.

Les divers échantillons de cendres ont une composition chimique assez reproductible donnée au tableau III. Les mesures de concentration des divers éléments ont été effectuées après destruction des échantillons à l'aide d'acide fluorhydrique.

Tableau III

| ANALYSE ELEMENTAIRE DES ECHANTILLONS DE CENDRES | | | | | | | |
|---|---|---|---|---|---|---|---|
| Echantillon | Ca ppm | Mg ppm | K ppm | Na ppm | Fe ppm | Mn ppm | |
| 1 | 21600 | 5050 | 20200 | 4130 | 38120 | 1170 | |
| 2 | 22370 | 4750 | 24950 | 4230 | 45220 | 1030 | |
| 3 | 21050 | 5030 | 23510 | 4210 | 21960 | 1030 | |
| 4 | 20990 | 5120 | 21280 | 4330 | 23300 | 1080 | |
| 5 | 28220 | 5390 | 23320 | 3850 | 28750 | 1230 | |
| 6 | 24410 | 4750 | 21540 | 4680 | 39680 | 1160 | |
| Echantillon | Cu ppm | Zn ppm | Cd ppm | Co ppm | Ni ppm | Pb ppm | Cr ppm |
| 1 | 100 | 510 | 12 | 65 | 110 | 200 | 550 |
| 2 | 130 | 505 | 9 | 100 | 130 | 190 | 1300 |
| 3 | 110 | 770 | 9 | 100 | 140 | 220 | 1140 |
| 4 | 90 | 400 | 10 | 100 | 120 | 260 | 840 |
| 5 | 140 | 700 | 8 | 100 | 130 | 190 | 950 |
| 6 | 150 | 720 | 8 | 90 | 120 | 200 | 1230 |

Plusieurs propriétés physico-chimiques, telles que le pH, la solubilité dans l'eau ont également été analysées :

Tableau IV

| PROPRIETES PHYSICO-CHIMIQUES DES ECHANTILLONS DE CENDRES | | | | | | | | |
|---|---|---|---|---|---|---|---|---|
| Echantillon | Solubilité des éléments dans l'eau | | | | | | | |
| | pH | Ca ppm | Mg ppm | K ppm | Na ppm | Fe ppm | Mn ppm | Cu ppm |
| 1 | 10.7 | 406 | 12 | 173 | 120 | 38100 | 1170 | 100 |
| 2 | 9.1 | 470 | 31 | 138 | 80 | 45200 | 1030 | 130 |
| 3 | 11.6 | 680 | 7 | 220 | 150 | 22000 | 1030 | 110 |
| 4 | 8.8 | 1380 | 61 | 200 | 170 | 23300 | 1080 | 90 |
| 5 | 11.3 | 480 | 7 | 210 | 130 | 28700 | 1230 | 140 |
| 6 | 9.0 | 760 | 51 | 150 | 95 | 39700 | 1160 | 150 |
| Echantillon | Zn | Cd | Co | Ni | Pb | Cr | $SO_4$ | |
| 1 | <0.1 | 0.08 | 0.35 | 0.16 | <0.05 | 12 | 590 | |
| 2 | <0.1 | 0.12 | 0.25 | 0.13 | <0.05 | 11 | 615 | |
| 3 | <0.1 | 0.05 | 0.35 | 0.08 | <0.05 | 12 | 450 | |
| 4 | 0.08 | 0.28 | 0.50 | 0.35 | <0.05 | 13 | - | |
| 5 | 0.02 | 0.02 | 0.15 | 0.05 | <0.05 | 12 | 462 | |
| 6 | 0.08 | 0.24 | 0.25 | 0.54 | <0.05 | 7 | 539 | |

De la composition élémentaire des cendres, on peut déduire la composition minéralogique suivante, classée par ordre d'importance :

- quartz;
- illite;
- magnétite;
- hématite;

- calcite, et
- gypse.

Les propriétés physico-chimiques d'un échantillon de matière adsorbante récupéré par élutriation selon le brevet belge n° 901.038 à partir de résidus charbonniers sont rassemblées au tableau IV. Elles sont comparées dans le tableau V, à celles de grains de sable ayant une répartition granulométrique différente et à des particules d'alumino-silicates anamorphosées activées selon la présente invention.

Tableau V

| PROPRIETES PHYSICO-CHIMIQUES | | | |
|---|---|---|---|
| Répartition granulométrique | Sable | Matière adsorbante selon BE-A-901.038 | Matière adsorbante activée et agrégée selon l'invention |
| 0-2 µ | 0.4 | 2.8 | 0.2 |
| 2-10 µ | 0.0 | 1.8 | 0.2 |
| 10-20 µ | 0.4 | 3.0 | 0.2 |
| 20-50 µ | 0.2 | 9.5 | - |
| 50-100 µ | 0.2 | 4.8 | 3.0 |
| 100-200 µ | 48.7 | 10.4 | 45.0 |
| 200-500 µ | 50.0 | 47.1 | 48.0 |
| 500-1000 µ | 0.1 | 20.6 | 0.4 |
| Surface spécifique (m2/g) | 1.7 | 8.8 | 17.1 |
| Matières organiques (% en poids) | 0.1 | 2.3 | 2.3 |
| $CaCo_3$ (% en poids) | 3.4 | 2.2 | 2.2 |
| Conductivité équivalente (méq/100g) | 0.5 | 7.7 | 6.0 |
| pH | 7.8 | 8.7 | 9.3 - 12.3 |
| Poids spécifique | 2,64 | 2.46 | - |
| Densité apparente en vrac | 1.7 | 1.10 à 1.40 | - |

La surface spécifique des particules d'alumino-silicates anamorphosés qui est généralement d'environ 8 à 10 m2/g immédiatement après l'élutriation peut en effet être augmentée par des traitements ultérieurs notamment en soumettant un gâteau de particules à une réaction d'oxydation à l'aide d'eau oxygénée en quantité de 2.5 ml $H_2O_2$/g d'alumino-silicate, par exemple, en vue d'éliminer le carbone libre et d'oxyder les ions fer ferreux $Fe^{++}$ en ions fer ferrique $Fe^{+++}$. L'élimination du carbone permet d'augmenter la surface spécifique desdits alumino-silicates, tandis que l'oxydation des ions du fer ferreux ou ions du fer ferrique initie des altérations qui engendrent de nouveaux centres actifs puisqu'on transforme certains composés insolubles dans l'eau en composés solubles.

On a remarqué que c'est l'oxydation des ions fer ferreux $Fe^{++}$ en ions fer ferrique $Fe^{+++}$ qui provoque l'altération souhaitée. La concentration d'ions fer ferreux souhaitée varie entre 0.7 et 1.5 %. Par élimination ultérieure des composés solubles par lavage à l'eau, lors de l'utilisation de la matière adsorbante activée dans un lit de percolation, se créent dans les particules ou feuillets d'alumino-silicates anamorphosés, de nouvelles cavités adsorbantes, qui permettent d'augmenter la surface active jusqu'à atteindre une valeur qui est supérieure de 70% et plus vis-à-vis du non traité.

Exemple 1

Un filtre biologique a lit fixe granulaire est formé d'une enceinte cylindrique de 2.5 cm de diamètre contenant 100 g d'alumino-silicates. Ce filtre constitue une colonne de percolation à lit poreux. De l'eau polluée par des salmonellas, colibacilles et streptocoques est conduite au travers du filtre.

Tableau VI

| ANALYSE BACTERIOLOGIQUE | |
|---|---|
| Type de germe pathogénique | Nombre de germes dans 100 ml d'eau avant filtration |
| Colibacille | 330.000 |
| Streptocoque | 260.000 |
| Salmonella | Test positif |

Divers essais ont été réalisés pour augmenter la surface spécifique ou la microporosité des particules solides afin d'améliorer l'efficacité de la colonne de contact.

Pour augmenter la surface spécifique et les propriétés d'adsorption de l'alumino-silicate susdit, on soumet les particules préalablement à un traitement à l'acide sulfurique dilué et l'acide chlorhydrique.

400 ml d'eau polluée sont conduits sans traitement préalable au travers du filtre biologique susdit. La vitesse d'écoulement atteint 42 cm/h.

Les valeurs des essais comparatifs effectués l'un avec les alumino-silicates anamorphosés (échantillon 1) et un matériau semblable préalablement traité (échantillon 2) sont analysées dans le tableau VII :

Tableau VII

| Résultats de la filtration | | |
|---|---|---|
| Germes pathogéniques | Nombre de germes après filtration de l'échantillon 1 | Nombre de germes après filtration de l'échantillon 2 |
| Colibacilles | 71.000 | 5.000 |
| Streptocoque | 4.200 | 600 |
| Salmonella | Test négatif | Test négatif |

Exemple 2

La masse adsorbante est simplement soumise à un traitement à l'acide sulfurique, sans traitement préalable à l'eau chlorée.

La vitesse de filtration est réduite à 25 cm/h. La quantité totale d'eau polluée traitée est de 600 ml dans un filtre semblable au premier, contenant la même quantité de masse filtrante, à savoir 100 g.

Tableau VIII

| Germes pathogéniques | Avant filtration | Après filtration |
|---|---|---|
| Colibacilles | 280.000 | 300 |
| Streptocoques | 54.000 | 100 |
| Nombre total de germes | 5.000.000 | 800.000 |

Il s'agit d'une filtration rapide à temps de contact extrêmement court. La vitesse de filtration au travers du lit est d'environ 1 m/h.

Exemple 3

Pour l'eau de la nappe sous-jacente à ce sol contaminé, on vérifie l'effet d'une percolation de celle-ci sur un lit de particules anamorphosées. Vitesse de percolation : 100 cm/h . On vérifie l'effet par analyse quantitative.

| Eléments | Co | Cd | Mn | As | Ni | Be |
|---|---|---|---|---|---|---|
| Teneurs en ppm. avant percol.<br>Teneurs en ppm après percol. d'un volume d'eau égal à 20 fois celui du lit | 57<br>0.3 | 1.7<br>0.2 | 1170<br>0.1 | 175<br>0.1 | 55<br>0.2 | 0.6<br>0.4 |
| Volume du percement | | | | | | |
| Quantité adsorbée sur l'adsorbant au moment du percement (%) | - | 33 | - | - | - | - |
| Eléments | Zu | Cu | Pb | Hg | $F^-$ | $CN^-$ |
| Teneurs en ppm avant percol.<br>Teneurs en ppm après percol d'un volume d'eau égal à 10 fois celui du lit. | 0.6<br>4 | 24<br>0.10 | 19<br>0.1 | 0.04<br>0.01 | 0.084<br>0.026 | 0.1<br>0.0 |
| Volume du percement | | | | | | |
| Quantité adsorbée sur l'adsorbant au moment du percement (%) | 8.6 | 16 | - | - | - | - |

Par les moyens d'investigation de laboratoire, on vérifie les phénomènes combinés d'une adsorption physique, presque instantanée, suivie d'une "Chélation" plus lente ou emprisonnement. Le pH n'affecte que très peu les phénomènes indiqués, même dans les limites très larges. Les concentrations atteintes sur l'adsorbant au moment du percement du lit filtrant au cours de la percolation constituent des résultats exceptionnels.

Exemple 4

Les alumino-silicates anamorphosés permettent également d'épurer le liquide de refroidissement et de graissage des machines-outils.

La solution lubrifiante est traitée par divers floculants tels que le trichlorure d'aluminium, le chlorure de fer ferrique et le sulfate de fer.

On fait percoler de haut en bas la solution à épurer à travers un lit submergé, pore constitué d'un manteau filtrant granulaire de particules d'alumino-silicates anamorphosés selon l'invention. L'épaisseur du lit atteint environ 10 cm.

La vitesse de percolation 50 ml de solution pour 100 g de lit filtrant. La percolation sur un lit de particules de matière anamorphosée permet de laisser la valeur de COD à moins de 300 mg.

Toute trace de copeaux, de limailles de fer et de tournures est ainsi éliminée de la solution après percolation.

| Composition d'une solution à épurer | | |
|---|---|---|
| Eau | : | 95.5 % |
| Huile + matières grasses | : | 4.4 % |
| - séparable par décantation | : | 0.1 % |
| - séparable par floculation | : | 0.8 % |
| - dissous | : | 2.5 % |
| Teneur en métal' | : | 1.1 % |

| Composition de la solution lubrifiante par machines-outils au cours des diverses étapes du traitement | | | | | |
|---|---|---|---|---|---|
| Métal | Echantillon initial | Traitements successifs | | | Matière floculée |
| | ppm | 1 flocul. ppm | 2 percol. ppm | 3 agit. ppm | ppm |
| Ca | 330 | 297 | 1222 | 110 | 340 |
| Mg | 277 | 30,9 | 23,2 | 5,4 | 217 |
| K | 673 | 759 | 816 | 972 | 296 |
| Na | 425 | 1748 | 1752 | 1874 | 479 |
| Fe | 234 | 0,40 | 0,26 | 0,35 | 50650 |
| Mn | 11 | 2,80 | 0,76 | 1,72 | 198 |
| Zn | 5800 | 0,182 | 0,124 | 0,162 | 8750 |
| Cr | 15 | 0 | 0 | 0 | 695 |
| Co | 1,5 | 0,04 | 0,05 | 0,04 | 8,5 |
| C | 43 | 5,1 | 0,96 | 2,97 | 7,8 |
| Ni | 41 | 0,13 | 0,17 | 0,15 | 87 |
| Pb | 253 | 0,31 | 0,32 | 0,25 | 5765 |
| Cd | 0,5 | 0,05 | 0,05 | 0,03 | 2 |
| pH | 9,0 | 7,5 | 7,5 | 7,5 | - |
| Ec 1/5 (ms/cm) | 4,19 | 11,26 | 11,64 | 11,25 | - |
| COD (mg $O_2$/l) | - | 11729 | 6480 | 11016 | - |
| % huiles + matières grasses | 100 | 25 | 25 | 25 | 96,3 |

La matière adsorbante saturée, après avoir été imprégnée de résine urée-formaldéhyde répond aux normes européennes pour pouvoir être déversée si les valeurs de pH, de lessivage Ec et de COD sont satisfaisantes, c'est-à-dire si la concentration des métaux lourds dans la matière adsorbante saturée est inférieure à une valeur limite pour chacun des métaux lourds suivants :

| | | |
|---|---|---|
| Cd | < | 20 à 40 mg/kg |
| Cu | < | 1000 à 1750 mg/kg |
| Ni | < | 300 à 400 mg/kg |
| Pb | < | 750 à 1200 mg/kg |
| Zn | < | 2500 à 4000 mg/kg |

Le lessivage d'un composé organique ou anorganique est déterminé par l'immersion pendant 30 jours d'un échantillon de 0.5 g de matière rendue solide dans un litre d'eau déminéralisée dans une enceinte fermée. Le pH et la conductivité électrique sont déterminés à l'aide d'une électrode WTW pH 91 et WTF LF 91. La valeur du COD est déterminée selon la méthode décrite dans la norme belge n° T91-201.

Le pH est compris entre 4 et 9; la conductivité électrique de l'eau est inférieure à 400 $\mu$S/cm et la valeur du COD est inférieure à 400 mg $O_2$/l.

**Revendications**

1. Procédé pour préparer une matière adsorbante active constituée d'alumino-silicates partiellement altérés, récupérés des déblais stériles des terrils charbonniers, caractérisé en ce qu'on soumet lesdits alumino-silicates à une réaction d'oxydation en vue d'éliminer le carbone libre et d'oxyder les ions fer ferreux en ions fer ferrique.

2. Procédé selon la revendication 1, caractérisé en ce qu'on soumet lesdits alumino-silicates à un grillage oxydant, généralement à l'air ou à une incinération à une température comprise entre 350 et 800 °C.

3. Procédé selon la revendication 2, caractérisé en ce que l'on met en oeuvre pour le grillage à l'air ou l'incinération, un four à lit fluidisé.

4. Procédé selon la revendication 2 ou 3, caractérisé en ce que les matières de départ sont des alumino-silicates constitués de résidus charbonniers contenant au moins 17 % en poids de stériles comprenant des dolomies et/ou des schistes.

5. Procédé selon la revendication 1, caractérisé en ce que l'on soumet des particules de roches anamorphosées à une oxydation à l'aide d'eau oxygénée ou en phase aqueuse en présence d'air ou d'oxygène éventuellement sous pression, à une température inférieure ou égale à la température d'ébullition du mélange réactionnel.

6. Procédé selon la revendication 1, caractérisé en ce qu'on soumet les alumino-silicates à un lavage à l'aide d'une solution aqueuse acide de trichlorure d'aluminium.

7. Procédé selon l'une quelconque des revendications précédentes, caractérisé en ce qu'on aggrège les fines particules actives d'alumino-silicates en granules de 100 à 500 µ, en les mélangeant, en étapes successives, avec une suspension aqueuse de conditionneurs de sols, en particulier de ciment ou urée-formaldéhyde, en quantité d'environ 10% en poids par rapport aux particules susdites.

8. Matière adsorbante active, constituée d'alumino-silicates partiellement altérés, récupérés des déblais stériles des terrils charbonniers, caractérisé en ce qu'elle présente une surface active comprise entre 10 et 20 m2/g.

9. Matière adsorbante active, caractérisée en ce qu'elle est constituée essentiellement des cendres volantes récupérées des gaz de combustion, par exemple à l'aide de cyclones et/ou d'électro-filtres, des gaz de combustion provenant du grillage à l'air ou de l'incinération dans un four à lit fluidisé, à une température comprise entre 350 et 800 °C de résidus charbonniers contenant au moins 15 % en poids de stériles.

Office européen des brevets

# RAPPORT DE RECHERCHE EUROPEENNE

Numero de la demande

EP 88 87 0059

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-1 402 112 (TELLIER)<br>* Page 2, ligne 44 - page 3, ligne 5; pages 3,4, revendications 1-14 *<br>--- | 1-3 | B 01 J 20/16 |
| A | US-A-4 440 867 (SABHERWAL)<br>* Colonne 2, ligne 26 - colonne 3, ligne 8; colonne 3, ligne 55 - colonne 7, ligne 5 *<br>--- | 1,9 | |
| A | NL-C- 50 153 (NEDERLANDSCHE RAFFINADERIJ VAN PETROLEUMPRODUCTEN)<br>* Page 1, lignes 58-73 *<br>--- | 1,5 | |
| A | DE-C- 568 128 (WIRTH)<br>* Page 2, lignes 50-94 *<br>--- | 1,5 | |
| A | US-A-1 884 954 (V. ZOUL)<br>* Page 2, lignes 110-125 *<br>--- | 6 | |
| A | DE-B-1 149 691 (CALVERT)<br>* Colonnes 11,12 *<br>--- | 1,9 | **DOMAINES TECHNIQUES RECHERCHES (Int. Cl.4)** |
| A | CHEMICAL ABSTRACTS, vol. 91, no. 22, novembre 1979, page 376, résumé no. 181220u, Columbus, Ohio, US; & JP-A-79 61 085 (G. HORI et al.) 17-05-1979<br>* Résumé *<br>----- | 1,2 | B 01 J |

Le présent rapport a été établi pour toutes les revendications

| Lieu de la recherche | Date d'achèvement de la recherche | Examinateur |
|---|---|---|
| LA HAYE | 14-11-1988 | WENDLING J.P. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)